# FASCICULE DE BREVET EUROPEEN

(11) **EP 2 694 243 B1**
(45) Date de publication et mention de la délivrance du brevet: **15.04.2015**
(21) Numéro de dépôt: 11785737.5
(22) Date de dépôt: 20.10.2011
(51) Int. Cl.: B23K 35/02, B23K 35/30, B23K 35/362, B23K 35/368, B23K 35/38

(54) **FIL FOURRE POUR LE SOUDAGE DES ACIERS A FORTE TENEUR EN NICKEL**
FÜLLDRAHT ZUM SCHWEISSUNG VON STAHL MIT HOHEM NICKELGEHALT
FLUX-CORED WIRE FOR WELDING STEEL HAVING A HIGH NICKEL CONTENT

(30) Priorité: 06.04.2011 FR 1152960
(43) Date de publication de la demande: 12.02.2014
(73) Titulaire: AIR LIQUIDE WELDING FRANCE, 75007 Paris (FR)
(72) Inventeur: CHOVET, Corinne, F-78700 Conflans Ste Honorine (FR); DUBET, Olivier, F-78210 Saint Cyr l'Ecole (FR); MOINE GALAND, Elodie, F-92400 Courbevoie (FR)
(74) Mandataire: Pittis, Olivier
(86) Numéro de dépôt international: PCT/FR2011/052455
(87) Numéro de publication internationale: WO 2012/136900

(56) Documents cités:
- EP-A1- 1 900 472
- US-A- 3 902 039
- US-A- 4 336 441
- US-A1- 2004 256 370
- HILKES J ET AL: "ELECTRODES FOR WELDING 9% NICKEL STEEL", WELDING JOURNAL, AMERICAN WELDING SOCIETY, MIAMI, FL, US, vol. 83, no. 1, 1 janvier 2004 (2004-01-01), pages 30-37, XP001222937, ISSN: 0043-2296

## Description

L'invention concerne un fil fourré pour le soudage des aciers contenant du nickel, en particulier des aciers à 9% de nickel (% en masse), ainsi qu'un procédé de soudage à l'arc mettant en oeuvre ledit fil fourré et un joint de soudure obtenu par fusion dudit fil fourré.

Les aciers à 9% de nickel, communément appelés « aciers 9%Ni », sont des matériaux présentant de bonnes caractéristiques de résiliences à basse température. En effet, ce type d'acier ne présente pas de transition ductile/fragile, permettant son utilisation à la température de l'azote liquide, c'est-à-dire -196°C.

Son domaine d'utilisation est donc le stockage du gaz naturel liquéfié (-163°C), ainsi que son transport par tube.

Plus spécifiquement, les applications possibles de ces tubes 9% Ni sont :
- les lignes on-shore de chargement ou déchargement des terminaux de GNL ou gaz naturel liquéfié,
- les tubes internes de lignes *pipe-in-pipe* off-shore ou on-shore, pour le chargement ou déchargement des terminaux GNL,
- les tubes externes de lignes *pipe-in pipe* et
- les tubes de structure pour réservoirs off-shore de GNL.

Face à la demande croissante d'énergie au niveau mondial, l'utilisation du gaz naturel liquéfié se multiplie, générant donc des besoins importants de constructions de réservoirs et de tubes de transports en aciers 9% Ni, ainsi que le besoin de soudage associé.

Les aciers 9%Ni sont actuellement soudés avec des consommables hétérogènes de type base nickel, tel les alliages 625 ou C276 par exemple.

Cependant, cette solution est coûteuse du fait de la forte teneur en nickel du consommable et le prix peut s'avérer très volatil du fait des fluctuations du cours du nickel.

De plus, d'un point de vue technique, la forte sensibilité à la fissuration à chaud de ce type d'alliage rend leur utilisation très compliquée.

Enfin, la résistance à la traction de ces alliages ne surpasse pas forcément celle du métal de base. Dès lors, la conception des réservoirs ainsi fabriqués est alors réalisée sur la soudure car c'est la zone la plus fragile de l'assemblage, et non sur le métal de base. Ceci génère des surépaisseurs et donc des surcoûts. De même, pour les tubes, l'étape d'expansion permettant la mise au rond devient impossible car elle conduirait à un déchirement de la soudure.

De nombreuses investigations ont été menées de façon à réaliser des soudures avec un métal d'apport homogène, la difficulté principale résidant en l'obtention de bonnes valeurs de résiliences du métal fondu, c'est-à-dire du joint de soudure ainsi obtenu.

Ainsi, pour obtenir de bonnes résiliences en métal fondu avec un métal d'apport homogène, sans traitement thermique, le document US-A-4,336,441 associe un fil massif permettant d'obtenir une faible teneur en oxygène du métal fondu et un procédé TIG avec passage d'un courant alternatif dans le fil chaud. Pour améliorer encore les résiliences, un traitement de refusion, via un arc TIG, peut être opéré.

Par ailleurs, un fil massif pour soudage sous gaz a également été proposé par les documents US-A-3,902,039 et US-A-4,336,441.

Toutefois, ces fils massifs engendrent des problèmes de stabilité d'arc et de souplesse d'utilisation lors de soudage GMAW (*Gas Metal Arc Welding* pour soudage à l'arc avec fil massif et gaz de protection).

En effet, la non-possibilité d'ajouter des éléments ionisants dans les fils massifs, par rapport à ceux ajoutés dans le fourrage des fils fourrés, conduit à des gammes de paramètres admissibles moins larges et des fusions moins douces qu'avec les fils fourrés.

De plus, la faible teneur en silicium des fils massifs, i.e. limitée dans ces documents à 0.15% en masse, engendre des problèmes de mouillage de cordon pouvant générer des défauts de compacité.

Enfin, la faible quantité de désoxydants apportée par les fils massifs, du fait en particulier de cette teneur en silicium limitée à 0.15%, ne permet pas une désoxydation suffisante du bain de soudage, générant des teneurs en oxygène dans le métal fondu élevées et non bénéfiques pour les résiliences.

Par ailleurs, le document EP-A-1900472 a, pour sa part, montré que les valeurs de résiliences pouvaient être améliorées grâce à un fil fourré basique à 9%Ni et une répartition de passes judicieuse, c'est-à-dire en obtenant une proportion de zone recuite élevée. Cependant, les résiliences obtenues sans traitement thermique post soudage, en arc submergé, bien que suffisantes, restent relativement faibles, à savoir de l'ordre de 40 J contre 34J demandées dans les applications actuelles de soudage de 9%Ni avec des métaux d'apport hétérogènes, laissant peu de marge à l'utilisateur. En effet, les teneurs en oxygène dans le métal déposé, c'est à dire le joint, sont relativement élevées, typiquement de l'ordre de 250 ppm en masse, ce qui oblige à une répartition de passes très précise de façon à maximiser la proportion de zone recuite.

Ceci engendre une difficulté lors de l'opération de soudage, à savoir une répartition de passe très stricte nécessitant des alignements, des suivis de joints et un contrôle des paramètres très stricts, rendant le procédé relativement peu tolérant.

Un traitement thermique post-soudage est alors une alternative possible, mais coûteuse, pour améliorer notablement les résiliences.

De plus, le fil utilisé dans le document EP-A-1900472 est un fil fourré basique, c'est-à-dire contenant du spath fluor, i.e. CaF₂. Un tel fil est bien adapté au soudage arc submergé (AS) comme expliqué dans le brevet. La présence de CaF₂ dans le fil génère un laitier, c'est-à-dire une couche d'oxyde sur le cordon de soudure, du fait de l'oxydation du Ca contenu dans le CaF₂.

Ce laitier est problématique en soudage TIG, FCAW (Flux Cored Arc Welding = soudage à l'arc avec fil fourré), laser hybride avec arc FCAW et plasma.

En effet, l'un des avantages principaux du procédé TIG est que les produits d'apport TIG ne génèrent justement pas de laitier. L'absence de laitier évite un décrassage entre chaque passe qui nuirait à la productivité et ne serait pas accepté par les utilisateurs puisque annulant un des principaux avantage du TIG.

En ce qui concerne le procédé FCAW, l'ajout de CaF₂ dans le fourrage conduit à un fil fourré dit « basique ». Ce fil a la caractéristique de générer un laitier sur le cordon de soudage, qui est en général relativement peu facile à décrasser car fin et se cassant en petites portions. De plus l'ajout de CaF₂ génère aussi une modification du transfert de goutte, à savoir que la quantité de projections est augmentée et les plages d'utilisations sont réduites par rapport au fil fourré sans CaF₂.

D'autre part, une difficulté majeure dans le cas d'un fil fourré est de s'assurer que le niveau d'oxygène est suffisamment bas dans le métal fondu, c'est-à-dire la soudure, pour ne pas engendrer de fragilité ou analogue du joint de soudure obtenu par fusion dudit fil fourré.

Le problème à résoudre est dès lors de proposer un fil de soudage amélioré ne présentant pas les inconvénients susmentionnés et qui permette de souder efficacement les aciers au nickel, en particulier les aciers à 9% de Ni, en donnant bonnes caractéristiques de résiliences en zone fondue, et qui soit non seulement utilisable en procédé de soudage AS mais surtout en procédé de soudage à l'arc TIG, avec fil fourré (FCAW), et même hybride arc/laser avec fil fourré ou plasma, c'est-à-dire un fil ne générant pas un laitier devant être éliminé entre les différentes passes.

La solution de l'invention porte sur un fil fourré comprenant une enveloppe en acier C-Mn et un flux de remplissage contenant au moins 95% en masse de poudres et/ou d'agglomérats métalliques, ledit flux représentant de 8 à 25% en masse totale du fil, le fil fourré comprenant, par rapport à la masse totale du fil, de 8 à 17% de Ni, de 0.05 à 0.35% de Si, de 0.3 à 0.85% de Mn, de 0.001 à 0.055% de C, moins de 450 ppm d'oxygène, moins de 0.5% de fluor et du fer, et étant totalement exempt de CaF₂.

L'utilisation d'un fil fourré à poudre métallique ne contenant pas de CaF₂ présente des avantages indiscutables pour une utilisation en TIG, FCAW, laser hybride avec arc FCAW ou plasma.

L'ajustement possible grâce au fourrage du fil fourré permet d'optimiser finement la teneur en silicium et en les autres éléments désoxydants, tel que C et Mn, de façon à obtenir une désoxydation efficace et donc une faible teneur en oxygène du métal fondu, c'est-à-dire dans le joint.

En outre, il est impératif de veiller à ce que le fil contienne une teneur en fluor inférieure à 0.5% en masse, de préférence inférieure à 0.1%, par rapport à la masse totale du fil, car le fluor dans ce cas n'est pas utilisé pour la formation d'un laitier mais simplement comme vecteur d'apport d'éléments ionisants, sous forme de LiF ou NaF par exemple. Par contre, comme déjà dit, il est indispensable que le fil soit exempt de CaF₂ pour éviter la formation d'un laitier, c'est-à-dire une couche d'oxyde sur le cordon de soudage.

Il s'ensuit que le fil fourré selon la présente invention est donc un fil fourré à poudres métalliques, appelé aussi « *metal cored* » en anglais, c'est-à-dire un fil donc le fourrage est essentiellement formé d'éléments métalliques sous forme de poudre ou de granulats ou agglomérats, c'est-à-dire à au moins 95% en masse du flux.

Selon le cas, le fil fourré de l'invention peut comprendre l'une ou plusieurs des caractéristiques optionnelles suivantes:
- le flux de remplissage représente entre 10 et 18% en masse par rapport à là masse totale du fil.
- il comporte au moins un élément ionisant choisi parmi les métaux alcalins.
- il comporte en outre au moins un élément ionisant choisi parmi Li, Na, K et Cs, de préférence sous forme d'un ou plusieurs fluorures et/ou carbonates.
- il contient, apporté par l'enveloppe (feuillard) et/ou le flux, en masse par rapport à la masse totale du fil, de 9 à 16% de Ni, de 0.1 à 0.25% de Si, de 0.4 à 0.65 % de Mn, de 0.005 à 0.035% de C, et/ou moins de 400 ppm d'oxygène.
- il contient, apporté par le l'enveloppe et/ou le flux, en masse par rapport à la masse totale du fil, moins de 0.1% en masse des éléments P, S, Ti, Al, Nb, V, B, W, Co, Cr, Zr, Ba.
- il comporte en outre au moins un élément d'alliage apporté sous forme de poudre métallique ou de ferroalliage.
- il contient en outre du fer pour le reste, c'est-à-dire typiquement de l'ordre de 83 à 90 % en masse de fer.
- l'élément Ni est contenu dans le flux.
- l'élément Si est contenu dans le flux et/ou dans l'enveloppe ou feuillard.
- l'enveloppe contient de 0.001 à 0.070% de C et/ou de 0.01% à 0.8 % de Mn.
- l'enveloppe et/ou le flux contiennent du Mn, de préférence l'enveloppe contient jusqu'à 0.25% de Mn.
- il contient moins de 80 ppm d'azote.
- il contient typiquement entre 100 et 390 ppm d'oxygène.
- il contient moins de 380 ppm d'oxygène.
- il contient moins de 0,4% en masse de fluor, de préférence moins de 0,3% en masse de fluor.
- il contient moins de 0,2% en masse de fluor, de préférence moins de 0,1% en masse de fluor.
- il contient un ou plusieurs fluorures de sodium ou lithium.
- il est exempt de fluor sous forme de CaF₂.
- le flux contient au moins 98% en masse de poudres métalliques, de préférence au moins 99% en masse.
- le fil fourré est de type feuillard ou tubulaire.
- le fil fourré est de type feuillard à poudres métalliques et est formé d'un feuillard rempli d'un flux sec composé à au moins 99% en masse de poudres métalliques, ledit feuillard rempli de poudre étant ensuite soudé sur toute sa longueur puis subit des opérations de tréfilage et/ou de laminage pour réduire son diamètre.
- le fil fourré est de type tubulaire à poudres métalliques et est formé d'un tube rempli d'un flux aggloméré composé à 95% au moins de poudres métalliques. Le tube est soudé sur toute la longueur avant remplissage, puis rempli seulement ensuite.
- le flux contient, en masse par rapport à la masse totale du flux, entre 40 et 100% de Ni, de préférence 45 à 90% de Ni, de 0 à 4.5% de Si, de préférence 0 à 3% de Si, de 0 à 10% de Mn, de préférence de 0 à 8% de Mn, de 0 à 0.7% de C, de préférence de 0 à 0.4% de C, moins de 0.2% d'oxygène, de préférence moins de 0.12% d'oxygène, moins de 0.07% d'azote, éventuellement du fer, une absence ou quasi absence de fluor, une absence de CaF₂, ainsi qu'éventuellement des éléments facilitant l'ionisation comme les alcalins, par exemple sodium, lithium ou potassium.

L'invention porte aussi sur un procédé de soudage choisi parmi les procédés de soudage à l'arc TIG, FCAW, plasma ou hybride laser/arc FCAW, dans lequel on opère la fusion d'un fil fourré selon l'invention pour réaliser un joint de soudure sur une ou plusieurs pièces en acier contenant du nickel en une proportion comprise entre 5 et 20% en masse.

Selon le cas, le procédé de soudage de l'invention peut comprendre l'une ou plusieurs des caractéristiques suivantes :
- on met en oeuvre une protection gazeuse formée d'un gaz oxydant choisi parmi l'oxygène, le CO₂ et leurs mélanges.
- on met en oeuvre une protection gazeuse formée d'un gaz oxydant ayant un pouvoir oxydant égal au maximum à 3% CO₂, de préférence inférieur à 2% de CO₂.
- on opère un soudage en plusieurs passes successives, i.e. en multipasse, de préférence entre 3 et 200 passes successives.
- on réalise un joint de soudure sur au moins une pièce en acier par fusion du fil fourré, ledit joint contenant du fer, de 8 à 17% de Ni, de 0.05 à 0.3% de Si, de 0.3 à 0.8% de Mn, de 0.001 à 0.05% de C, moins de 150 ppm d'oxygène, moins de 80 ppm d'azote, de 0.002 à 0.010 de P, de 0.002 à 0.010 de S, de 0.002 à 0.012 de Ti et de 0.005 à 0.018% de Al par rapport à la masse du joint. De préférence, on réalise un joint de soudure contenant, en outre, de 9 à 16% de Ni, de 0.1 à 0.2% de Si, de 0.4 à 0.7% de Mn, de 0.01 à 0.03% de C, moins de 100 ppm d'oxygène et majoritairement du fer par rapport à la masse du joint. Le joint soudé peut également contenir du baryum, zirconium, chrome et/ou lithium ou un autre alcalin, niobium, vanadium, bore, tungstène ou cobalt, en une proportion inférieure à 0.1 % en masse, ces éléments pouvant se présenter sous forme métallique, d'oxydes et/ou d'un composé comprenant l'un ou plusieurs de ces éléments.
- on réalise un joint de soudure pour assembler deux pièces en acier, par exemple des tôles ou des tubes, contenant du nickel en une proportion comprise entre 5 et 20% en masse, typiquement de l'ordre de 9% de nickel.

En d'autres termes, l'invention porte sur un fil fourré dont notamment la proportion d'oxygène et en certains autres composés particuliers, tel Ni, F et CaF₂, est précisément contrôlée de façon à obtenir de bonnes caractéristiques de résilience en zone fondue, et sur l'utilisation de ce fil fourré en soudage des aciers au nickel, typiquement de ceux à 9% en masse de nickel.

Le fil fourré peut être mis en oeuvre dans un procédé de soudage à l'arc générant une atmosphère peu oxydante, de préférence à l'arc TIG, plasma ou MAG, ou un procédé hybride laser-arc FCAW, avec gaz légèrement oxydant, c'est-à-dire contenant jusqu'à 3% en volume, de préférence moins de 2% en volume, d'un gaz de type CO₂ ou O₂, typiquement jusqu'à 1.5% en volume d'O₂, ou un mélange O₂/CO₂ dont les teneurs en O₂ et CO₂ sont contrôlées de façon à ce que le pouvoir d'oxydation du mélange O₂/CO₂ ne dépasse pas celui de 3% de CO₂, le reste du gaz de protection étant composé de gaz inerte, par exemple d'argon ou d'hélium, avec éventuellement mise en oeuvre d'un régime pulsé pour stabiliser l'arc.

Par ailleurs, une répartition judicieuse des passes de soudage permet d'optimiser les résiliences. Plus spécifiquement, la maximisation de la zone recuite (zone d'une passe réchauffée par la passe suivante) est recherchée, car la microstructure obtenue alors est plus favorable aux résiliences

De façon générale, l'utilisation d'un fil fourré selon l'invention en procédé de soudage à l'arc apporte plus de souplesse, par exemple un domaine d'utilisation plus grand, grâce à l'ajout d'éléments ionisants facilitant la fusion, l'existence de moins de projections et un taux de dépôt augmenté.

### Exemple 1

L'Exemple 1 montre les résultats obtenus en métal fondu hors dilution avec un fil fourré de type *« métal cored »* classique, un fil fourré basique tel que décrit dans le document EP-A-1900472 et, à titre comparatif, avec le fil fourré 1 selon l'invention ; les fils testés ont le même diamètre, à savoir 1,2 mm, et un taux de remplissage de 17% environ.

Les compositions chimiques des fils utilisés dans les exemples 1 à 3 sont données dans le Tableau 1.

**Tableau 1**

| Eléments | Fil fourré classique (*) | Fil fourré selon EP1900472 (*) | Fil fourré 1 selon l'invention (*) | Fil fourré 2 selon l'invention (*) |
|---|---|---|---|---|
| C | 0.012 | 0.003 | 0.038 | 0.006 |
| Si | 0.29 | 0.02 | 0.27 | 0.1 |
| Mn | 0.26 | 0.18 | 0.73 | 0.54 |
| P | 0.008 | 0.008 | 0.007 | 0.008 |
| S | 0.01 | 0.008 | 0.009 | 0.009 |
| Ni | 10.5 | 10.9 | 12.8 | 11.6 |
| O (ppm) | 730 | Evalué à environ 300 | 360 | 350 |
| N (ppm) | 10 | Evalué à 40 | 23 | 30 |
| Fluor | traces | 2 à 15% | traces | traces |
| CaF₂ | 0 | 6 à 47% | 0 | 0 |
| Fer | Balance (enveloppe et flux) | Balance (enveloppe uniquement) | Balance (enveloppe et flux) | Balance (enveloppe et flux) |

| | | | | |
|---|---|---|---|---|
| (*) : % en masse du fil | | | | |

Ces compositions sont calculées à partir de l'analyse de la poudre réalisée par ICP : spectrométrie par torche à plasma) et par Leco pour les éléments C et S, et du feuillard réalisée par spectrométrie par étincelage et par Leco pour les éléments C et S, sauf pour l'oxygène et l'azote qui sont eux, mesurés sur le fil.

Plus précisément, la spectrométrie par étincelage est décrite dans l'article W. Grimm, Spectrochemica Acta 23B, p443 (1968).

Par ailleurs, l'analyse élémentaire d'oxygène et d'azote est faite par analyse du CO et CO₂ après fusion de l'échantillon, comme décrit dans la norme ASTM E1019-08 : *Standard Test Methods for Determination of Carbon, Sulfur, Nitrogen, and Oxygen in Steel, Iron, Nickel, and Cobalt Alloys by Various Combustion and Fusion Techniques.* L'ASTM E1019-08 décrit également une méthode d'analyse de C et S.

Enfin, l'analyse ICP est décrite dans R.H. Wendt et V.A. Fassel, Induction coupled plasma source spectrometric excitation, Anal. Chem. (USA) 37, p920 (1965).

Le dépôt de métal fondu est réalisé hors dilution, sur un métal de base de type 9%Ni, dont la composition est donnée au Tableau 2. Elle a été déterminée par spectrométrie par étincelage pour tous les éléments sauf pour les éléments O et N dont les proportions ont été mesurées par la méthode décrite ci-dessus.

**Tableau 2**

| Eléments | Métal de base (% en masse) |
|---|---|
| C | 0.033 |
| Si | 0.23 |
| Mn | 0.58 |
| P | 0.002 |
| S | 0.004 |
| Ni | 9.5 |
| O (ppm) | 5 |
| N (ppm) | 33 |
| fer | reste |

Pour le fil fourré classique et le fil fourré 1 selon l'invention, le soudage est réalisé de la façon suivante. Le joint soudé a été réalisé en 60 passes de soudage de façon à être hors dilution, dans un chanfrein en V, selon un angle total de 60° environ, un écartement de 4 mm et une épaisseur 12.7 mm. Le soudage est réalisé par procédé de soudage à l'arc plasma avec une énergie de soudage de 12 kJ/cm. Les gaz de soudage utilisés sont de l'argon à un débit de 1 l/min (gaz plasmagène) et un mélange argon et de 70% en volume d'hélium à un débit de 25 l/min (gaz annulaire). La température interpasse est de 150°C. Le générateur de courant utilisé est commercialisé par la société AIR LIQUIDE WELDING sous la dénomination NERTAMATIC 450 AC/DC et la torche est une torche de type SP7 commercialisée par AIR LIQUIDE WELDING.

Le système de refroidissement est un FRIOGET 30, le système de dévidage un VARISAF 20, le générateur de soudage est un Starmatic 1003 AC/DC et l'installation de soudage est de type SUBARC 5 ; ces équipements sont commercialisés par la société AIR LIQUIDE WELDING.

Par ailleurs, pour le fil fourré selon EP1900472, le soudage est réalisé de la façon suivante. Un métal déposé est réalisé de façon à être hors dilution. Le soudage est réalisé par procédé de soudage à l'arc submergé avec une énergie de soudage de 17 kJ/cm. Le flux de protection est un flux basique de type SA FB suivant la EN 760, à savoir un fil OP76 commercialisé par AIR LIQUIDE WELDING.

Le générateur de soudage est un Starmatic 1003 AC/DC et l'installation de soudage est de type Subarc 5, commercialisés par la société AIR LIQUIDE WELDING.

Les résultats obtenus sont consignés dans le Tableau 3.

**Tableau 3**

| Eléments (*) | Fil fourré classique | Fil selon EP1900472 | Fil fourré 1 selon l'invention |
|---|---|---|---|
| C | < 0,005 | 0.038 | 0,036 |
| Si | 0,26 | 0.038 | 0,25 |
| Mn | 0,24 | 0.28 | 0,68 |
| P | 0,008 | 0.008 | 0,005 |
| S | 0,01 | 0.010 | 0,009 |
| Ni | 10,1 | 10.3 | 12,8 |
| O (ppm) | 272 | 404 | 64 |
| N (ppm) | 36 | 43 | 39 |
| Fe | balance | balance | balance |

| | | | |
|---|---|---|---|
| (*) : % en masse de métal déposé | | | |

Comme on le voit dans le Tableau 3, la teneur en oxygène du métal fondu (hors dilution) est divisée par plus de 4 avec le fil fourré de l'invention (ici exemple du fil fourré 1) par rapport au fil fourré standard classique et par plus de 6 par rapport au fil fourré selon EP1900472.

### Exemple 2

L'Exemple 2 vise à montrer que les fils fourrés de l'invention permettent d'obtenir de bonnes caractéristiques de résiliences et de soudabilité lorsqu'ils sont utilisés dans différents procédés de soudage générant une atmosphère peu oxydante.

L'assemblage à souder est du type chanfrein en X et la première passe est opérée par soudage laser-arc hybride avec métal d'apport et mise en oeuvre d'une énergie de soudage de 8.5 kJ/cm. Le métal d'apport est le même fil fourré que celui utilisé ensuite pour le remplissage du chanfrein. Le remplissage et la fusion du fil fourré est effectué avec soit un procédé de soudage MAG, soit plasma, comme indiqué dans le Tableau 4. Une protection envers avec de l'argon est mise en oeuvre et les bords du chanfreins sont meulés. La température interpasse est inférieure à 150°C. Le matériel utilisé en plasma est identique à celui de l'Exemple 1. Le soudage MAG est opéré avec un générateur Digi@wave 500 et une torche PROMIG NG 441w de la société AIR LIQUIDE WELDING. Un fil fourré classique (fil non optimisé en oxygène) est également testé à titre comparatif En fait, les fils fourrés et le métal de base utilisés sont les mêmes que ceux présentés en Tableau 1 et 2.

**Tableau 4**

| Procédé | MAG | MAG | Plasma |
|---|---|---|---|
| Configuration | X | X | X |
| diamètre fil (mm) | 1.2 | 1.2 | 1.2 |
| Fil | Fil fourré 1 selon l'invention | Fil fourré classique | Fil fourré 1 selon l'invention |
| Gaz soudage | Ar-18%He-1 %CO2 | Ar-18%He-1%CO2 | Ar/ Ar-70%He |
| Energie de soudage | 4,7 kJ/cm | 4,7 kJ/cm | 12 kJ/cm |
| C% | 0.04 | 0.02 | 0.05 |
| Si% | 0.24 | 0.23 | 0.24 |
| Mn % | 0.69 | 0.35 | 0.71 |
| P% | 0.006 | 0.006 | 0.005 |
| S% | 0.01 | 0.005 | 0.008 |
| Ni % | 11.6 | 9.2 | 11.7 |
| O ppm | 94 | 402 | 90 |
| N ppm | 50 | 40 | 45 |
| Fe % | reste | reste | reste |
| KV moy (J à -196°C) | 41 | 19 | 77 |
| Expansion latérale moy (mm à - 196°C) | 0.35 | - | 0.54 |

Le Tableau 4 permet de constater que seul le fil fourré de l'invention permet d'arriver à un résultat satisfaisant en termes de résilience, à savoir des valeurs de résilience d'au moins 41 J à -196°C, soit au moins 2 fois plus élevées que celle obtenue avec le fil classique (19 J).

De plus, la fusion obtenue pour procédé MAG est bonne, c'est-à-dire régulière et douce avec peu de projection, grâce aux éléments ionisants (Na, Li, K...) qui peuvent être apportés dans le flux constitutif du fil fourré.

En plasma également, les performances opératoires sont bonnes. Le fait de pouvoir adapter la chimie de par le fourrage du fil fourré, permet d'obtenir, en plasma comme en MAG, de bonnes caractéristiques de dépôt, en particulier d'angle de mouillage.

A noter que cette soudabilité pourrait être encore améliorée grâce à l'utilisation d'un régime pulsé. Ce régime peut également permettre l'utilisation d'un gaz encore moins oxydant (par exemple 0.5% de CO₂) puisque la stabilisation de la fusion se fait alors grâce aux pulsations.

Dans cet Exemple 2, la répartition de passe n'a pas été optimisée. En effet, des résiliences bien supérieures peuvent être obtenues en cumulant la faible proportion d'oxygène du fil fourré et la maximisation de la zone recuite, comme montré dans l'Exemple 3.

### Exemple 3

L'Exemple 3 montre comment, en utilisant le fil fourré de l'invention et une répartition de passes favorable, il est possible d'obtenir d'excellentes résiliences en zone fondue, c'est-à-dire des résiliences d'au moins 100 J à -196°C.

L'assemblage est de type chanfrein en X, avec une première passe en plasma sans métal d'apport en pulsé. Le Tableau 5 donne les paramètres de cette première passe.

Les gaz de soudage utilisés sont de l'argon (gaz plasmagène) et un mélange argon +70% en volume d'hélium (gaz annulaire).

De l'argon est utilisé pour la protection envers.

**Tableau 5**

| I(haut/bas) (A) | F (Hz) | Rc % | Tension (V) | Vitesse soudage (cm/mn) | Débit gaz Plasmagène (l/mn) | Débit gaz Annulaire (l/mn) | Débit gaz Envers (l/mn) |
|---|---|---|---|---|---|---|---|
| 260/165 | 8 | 80 | 30 | 11-18 | 5 | 25 | 15 |

Les bords du chanfrein sont meulés. La température interpasse est inférieure à 150°C. Le remplissage est effectué avec procédé TIG double flux. Les gaz de soudage utilisés sont de l'argon (gaz plasmagène) et un mélange argon +70% en volume d'hélium (gaz annulaire). Les paramètres sont donnés en Tableau 6.

**Tableau 6**

| Intensité (A) | Tension (V) | Vitesse de fil (cm/mn) | Vitesse soudage (cm/mn) | Débit gaz Plasmagène (l/mn) | Débit gaz Annulaire (l/mn) |
|---|---|---|---|---|---|
| 296 | 15 | 130-180 | 23 | 1 | 25 |

Le générateur de courant utilisé est de type Nertamatic 450 et la torche de type SP7 comme précédemment.

Le fil fourré selon l'invention et le métal de base sont les mêmes que dans les exemples précédents. Les résultats sont présentés en tableau 7.

**Tableau 7**

| Procédé | TIG double flux | TIG double flux | TIG double flux |
|---|---|---|---|
| Configuration | X Nombre de passes impair Répartition favorable | X Nombre de passes pair Répartition favorable | X Nombre de passes impair Répartition non favorable |
| diamètre fil (mm) | 1.2 | 1.2 | 1.2 |
| Fil | Fil fourré 2 selon l'invention | Fil fourré 2 selon l'invention | Fil fourré 2 selon l'invention |
| Gaz soudage | Ar/ Ar-70%He | Ar/ Ar-70%He | Ar/ Ar-70%He |
| Energie de soudage | 11 kJ/cm | 11 kJ/cm | 11 kJ/cm |
| C % | 0.024 | 0.02 | 0.013 |
| Si % | 0.16 | 0.14 | 0.13 |
| Mn % | 0.53 | 0.52 | 0.54 |
| P% | 0.008 | 0.008 | 0.005 |
| S % | 0.009 | 0.009 | 0.005 |
| Ni % | 10.6 | 10.2 | 10.5 |
| O ppm | 85 | 84 | 85 |
| N ppm | 72 | 47 | 60 |
| Fe % | reste | reste | reste |
| KV moy (J à -196°C) | 191 | 172 | 64 |
| Expansion latérale moyenne (mm à -196°C) | 1.89 | 1.49 | 0.7 |

Les deux premières colonnes de gauche illustrent ce qu'il est possible d'obtenir grâce au fil fourré de l'invention et une répartition de passes favorable.

Comme cité dans l'art antérieur, une zone recuite, c'est-à-dire la partie de la passe n réaffectée thermiquement par une des passes suivantes n+x, ou x est compris entre 1 et le nombre total de passes -n, est par nature plus résiliente que la zone brute, c'est-à dire la partie de la passe non réaffectée thermiquement par la passe n+x. En effet, la microstructure obtenue est différente et présente des caractéristiques morphologiques lui conférant de meilleures propriétés de résiliences que celle obtenue en zone brute.

Le but dans ce cas est donc d'optimiser la répartition de passes pour maximiser la proportion de zone recuite dans l'axe de l'entaille de la résilience. Cette répartition peut être déterminée aisément par des essais de routine. Elle sera fonction, ainsi que le nombre total de passes, de l'épaisseur du matériau et du taux de dépôt du procédé.

Le nombre de passes est typiquement entre 3 et 200, pour du 9%Ni jusqu'à 50mm d'épaisseur. Il est à noter que pour la troisième colonne, bien qu'avec une répartition de passe non favorable (zone brute de solidification dans l'axe de l'entaille de la résilience), les résiliences obtenues sont satisfaisantes. C'est d'ailleurs ce qui avait été constaté dans les Exemples 1 et 2. Ceci permet d'offrir une certaine souplesse, le contrôle de la répartition de passe, sur de grandes longueurs par exemple, n'étant pas forcément des plus aisé.

De la même façon, le maintien de résiliences excellentes que l'on ait un nombre de passes pair ou impair (colonnes 1 et 2) prouve la souplesse de la solution.

## Revendications

1. Fil fourré comprenant une enveloppe en acier C-Mn et un flux de remplissage contenant au moins 95% en masse de poudres et/ou d'agglomérats métalliques, ledit flux représentant de 8 à 25% en masse totale du fil, le fil fourré comprenant, par rapport à la masse totale du fil, de 8 à 17% de Ni, de 0.05 à 0.35% de Si, de 0.3 à 0.85% de Mn, de 0.001 à 0.055% de C, moins de 450 ppm d'oxygène, moins de 0.5% de fluor et du fer, et étant totalement exempt de CaF₂.

2. Fil fourré selon la revendication 1, **caractérisé en ce qu'**il comporte en outre au moins un élément ionisant choisi parmi Li, Na, K et Cs, de préférence sous forme d'un ou plusieurs fluorures et/ou carbonates.

3. Fil fourré selon l'une des revendications 1 ou 2, **caractérisé en ce qu'**il contient, en masse par rapport à la masse totale du fil, de 9 à 16% de Ni, de 0.1 à 0.25% de Si, de 0.4 à 0.65 % de Mn, de 0.005 à 0.035% de C et moins de 400 ppm d'oxygène.

4. Fil fourré selon l'une des revendications 1 à 3, **caractérisé en ce qu'**il contient moins de 80 ppm d'azote.

5. Fil fourré selon l'une des revendications 1 à 4, **caractérisé en ce que** l'enveloppe contient de 0.001 à 0.07 % de C et/ou de 0.01% à 0.8 % de Mn.

6. Fil fourré selon l'une des revendications 1 à 5, **caractérisé en ce qu'**il contient moins de 400 ppm d'oxygène, de préférence moins de 380 ppm d'oxygène.

7. Fil fourré selon l'une des revendications précédentes, **caractérisé en ce qu'**il contient moins de 0,4% en masse de fluor, de préférence moins de 0,3% en masse de fluor.

8. Fil fourré selon l'une des revendications précédentes, **caractérisé en ce qu'**il contient moins de 0,2% en masse de fluor.

9. Fil fourré selon l'une des revendications précédentes, **caractérisé en ce qu'**il contient moins de 0,1 % en masse de fluor.

10. Fil fourré selon l'une des revendications précédentes, **caractérisé en ce qu'**il contient un ou plusieurs fluorures de sodium ou lithium.

11. Fil fourré selon l'une des revendications précédentes, **caractérisé en ce qu'**il est exempt de fluor sous forme de CaF₂.

12. Fil fourré selon l'une des revendications précédentes, **caractérisé en ce que** le flux contient au moins 98% en masse de poudres métalliques, de préférence au moins 99% en masse.

13. Procédé de soudage choisi parmi les procédés de soudage à l'arc TIG, FCAW, plasma ou hybride laser/arc FCAW, dans lequel on opère la fusion d'un fil fourré selon l'une des revendications 1 à 13 pour réaliser un joint de soudure sur une ou plusieurs pièces en acier contenant du nickel en une proportion comprise entre 5 et 20% en masse, de préférence l'acier à souder contient environ 9% de nickel en masse.

14. Procédé selon la revendication 13, **caractérisé en ce qu'**on met en oeuvre une protection gazeuse formée d'un gaz oxydant choisi parmi l'oxygène, le CO₂ et leurs mélanges, de préférence le gaz oxydant a un pouvoir oxydant égal au maximum à 3% CO₂, de préférence inférieur à 2% de CO₂.

15. Procédé selon l'une des revendications 13 ou 14, **caractérisé en ce qu'**on réalise un joint de soudure sur au moins une pièce en acier par fusion du fil fourré, ledit joint contenant du fer, de 8 à 17% de Ni, de 0.05 à 0.3% de Si, de 0.3 à 0.8% de Mn, de 0.001 à 0.05% de C, et moins de 150 ppm d'oxygène, moins de 80 ppm d'azote, de 0.002 à 0.010 de P, de 0.002 à 0.010 de S, de 0.002 à 0.012 de Ti et de 0.005 à 0.018% de Al par rapport à la masse du joint.

## Patentansprüche

1. Fülldraht, der eine Umhüllung aus C-Mn-Stahl und ein Füllflussmittel umfasst, das mindestens 95 Masse-% Metallpulver und/oder Metallagglomerate enthält, wobei das Flussmittel 8 bis 25 % der Gesamtmasse des Drahtes darstellt, wobei der Fülldraht relativ zu der Gesamtmasse des Drahtes 8 bis 17 % Ni, 0,05 bis 0,35 % Si, 0,3 bis 0,85 % Mn, 0,001 bis 0,055 % C, weniger als 450 ppm Sauerstoff, weniger als 0,5 % Fluor und Eisen enthält und vollkommen frei von CaF₂ ist.

2. Fülldraht nach Anspruch 1, **dadurch gekennzeichnet, dass** er ferner mindestens ein ionisierendes Element, das aus Li, Na, K und Cs ausgewählt ist, bevorzugt in Form eines oder mehrerer Fluoride und/oder Carbonate, aufweist.

3. Fülldraht nach einem der Ansprüche 1 oder 2, **dadurch gekennzeichnet, dass** er relativ zu der Gesamtmasse des Drahtes 9 bis 16 Masse-% Ni, 0,1 bis 0,25 Masse-% Si, 0,4 bis 0,65 Masse-% Mn, 0,005 bis 0,035 Masse-% C und weniger als 400 ppm Sauerstoff enthält.

4. Fülldraht nach einem der Ansprüche 1 bis 3, **dadurch gekennzeichnet, dass** er weniger als 80 ppm Stickstoff enthält.

5. Fülldraht nach einem der Ansprüche 1 bis 4, **dadurch gekennzeichnet, dass** die Metallumhüllung 0,001 bis 0,07 % C und/oder 0,01 bis 0,8 % Mn enthält.

6. Fülldraht nach einem der Ansprüche 1 bis 5, **dadurch gekennzeichnet, dass** er weniger als 400 ppm Sauerstoff, bevorzugt weniger als 380 ppm Sauerstoff, enthält.

7. Fülldraht nach einem der vorhergehenden Ansprüche, **dadurch gekennzeichnet, dass** er weniger als 0,4 Masse-% Fluor, bevorzugt weniger als 0,3 Masse-% Fluor, enthält.

8. Fülldraht nach einem der vorhergehenden Ansprüche, **dadurch gekennzeichnet, dass** er weniger als 0,2 Masse-% Fluor enthält.

9. Fülldraht nach einem der vorhergehenden Ansprüche, **dadurch gekennzeichnet, dass** er weniger als 0,1 Masse-% Fluor enthält.

10. Fülldraht nach einem der vorhergehenden Ansprüche, **dadurch gekennzeichnet, dass** er ein oder mehrere Natrium- oder Lithium-Fluoride enthält.

11. Fülldraht nach einem der vorhergehenden Ansprüche, **dadurch gekennzeichnet, dass** er frei von Fluor in Form von CaF₂ ist.

12. Fülldraht nach einem der vorhergehenden Ansprüche, **dadurch gekennzeichnet, dass** das Flussmittel mindestens 98 Masse-% Metallpulver, bevorzugt mindestens 99 Masse-%, enthält.

13. Schweißverfahren, das unter den TIG-, FCAW-, Plasma- oder Hybrid-Laser-Lichtbogen-Schweißverfahren ausgewählt ist und bei dem das Abschmelzen eines Fülldrahtes nach einem der Ansprüche 1 bis 13 durchgeführt wird, um eine Schweißnaht auf einem oder mehreren Teilen aus Stahl herzustellen, der Nickel in einem Verhältnis zwischen 5 und 20 Masse-% enthält, wobei der zu schweißende Stahl bevorzugt etwa 9 Masse-% Nickel enthält.

14. Verfahren nach Anspruch 13, **dadurch gekennzeichnet, dass** ein gasförmiger Schutz verwendet wird, der von einem oxidierenden Gas gebildet ist, das aus Sauerstoff, CO₂ und Gemischen davon ausgewählt wird, wobei das oxidierende Gas ein Oxidationsvermögen hat, das maximal gleich 3 % CO₂, bevorzugt kleiner als 2 % CO₂, ist.

15. Verfahren nach einem der Ansprüche 13 oder 14, **dadurch gekennzeichnet, dass** eine Schweißnaht auf mindestens einem Teil aus Stahl durch Abschmelzen des Fülldrahtes hergestellt wird, wobei die Naht Eisen, 8 bis 17 % Ni, 0,05 bis 0,3 % Si, 0,3 bis 0,8 % Mn, 0,001 bis 0,05 % C und weniger als 150 ppm Sauerstoff, weniger als 80 ppm Stickstoff, 0,002 bis 0,010 P, 0,002 bis 0,010 S, 0,002 bis 0,012 Ti und 0,005 bis 0,018 % Al relativ zu der Masse der Naht enthält.

## Claims

1. Flux-cored wire, comprising a sheath made of C-Mn steel and a filling flux containing at least 95 wt.% metal powders and/or agglomerates, said flux representing from 8 to 25 % of the total weight of the wire, the flux-cored wire comprising, relative to the total weight of the wire, from 8 to 17 % Ni, from 0.05 to 0.35 % Si, from 0.3 to 0.85 % Mn, from 0.001 to 0.055 % C, less than 450 ppm of oxygen, less than 0.5 % fluorine and iron, and being completely free of CaF₂.

2. Flux-cored wire according to claim 1, **characterised in that** it further comprises at least one ionising element selected from Li, Na, K and Cs, preferably in the form of one or more fluorides and/or carbonates.

3. Flux-cored wire according to either claim 1 or claim 2, **characterised in that** it contains, by weight relative to the total weight of the wire, from 9 to 16 % Ni, from 0.1 to 0.25 % Si, from 0.4 to 0.65 % Mn, from 0.005 to 0.035 % C and less than 400 ppm of oxygen.

4. Flux-cored wire according to any of claims 1 to 3, **characterised in that** it contains less than 80 ppm of nitrogen.

5. Flux-cored wire according to any of claims 1 to 4, **characterised in that** the sheath contains from 0.001 to 0.07 % C and/or from 0.01 % to 0.8 % Mn.

6. Flux-cored wire according to any of claims 1 to 5, **characterised in that** it contains less than 400 ppm of oxygen, preferably less than 380 ppm of oxygen.

7. Flux-cored wire according to any of the preceding claims, **characterised in that** it contains less than 0.4 wt.% fluorine, preferably less than 0.3 wt.% fluorine.

8. Flux-cored wire according to any of the preceding claims, **characterised in that** it contains less than 0.2 wt.% fluorine.

9. Flux-cored wire according to any of the preceding claims, **characterised in that** it contains less than 0.1 wt.% fluorine.

10. Flux-cored wire according to any of the preceding claims, **characterised in that** it contains one or more fluorides of sodium or lithium.

11. Flux-cored wire according to any of the preceding claims, **characterised in that** it is free of fluorine in the form of CaF₂.

12. Flux-cored wire according to any of the preceding claims, **characterised in that** the flux contains at least 98 wt.% metal powders, preferably at least 99 wt.%.

13. Welding method selected from TIG arc welding, FCAW arc welding, plasma arc welding or hybrid laser/FCAW arc welding, wherein a flux-cored wire according to any of claims 1 to 13 is melted to produce a weld joint on one or more steel parts containing nickel in a proportion of between 5 and 20 wt.%, the steel to be welded preferably containing approximately 9 wt.% nickel.

14. Method according to claim 13, **characterised in that** a gas shield formed of an oxidising gas selected from oxygen, CO₂ and mixtures thereof is used, the oxidising gas preferably having an oxidising power which is equal to at most 3 % of CO₂, preferably less than 2 % of CO₂.

15. Method according to either claim 13 or claim 14, **characterised in that** a weld joint is produced on at least one steel part by melting the flux-cored wire, said joint containing iron, from 8 to 17 % Ni, from 0.05 to 0.3 % Si, from 0.3 to 0.8 % Mn, from 0.001 to 0.05 % C, and at least 150 ppm of oxygen, less than 80 ppm of nitrogen, from 0.002 to 0.010 P, from 0.002 to 0.010 S, from 0.002 to 0.012 Ti and from 0.005 to 0.018 % Al relative to the weight of the joint.
